# EUROPEAN PATENT APPLICATION

(11) **EP 4 741 649 A1**
(43) Date of publication of application: **13.05.2026**
(21) Application number: 25214101.5
(22) Date of filing: 06.11.2025
(51) Int. Cl.: F02K 9/64, F02K 9/97

(54) **HEAT EXCHANGER WITH WAVEFORM CHANNEL PROFILE**

(30) Priority: 06.11.2024 US 202418938701
(71) Applicant: Aerojet Rocketdyne, Inc., Melbourne, FL 32901 (US)
(72) Inventor: FUNG, Alan, Melbourne, 32919 (US); HELALI, Joseph, Melbourne, 32919 (US); ARADHEY, Yogesh, Melbourne, 32919 (US); THUM, Erika Heather, Melbourne, 32919 (US)
(74) Representative: Dehns

(57) **Abstract**

A heat exchanger (20) includes a wall (22) that has a first end (22a), a second end (22b), a first side (22c) that bounds a chamber (24), and a second side (22d) opposite the first side (22c). The first side (22c) and the second side (22d) extend from the first end (22a) to the second end (22b). The wall (22) defines a length direction from the first end (22a) to the second end (22b). There is an array of cooling channels (26) embedded in the wall (22) to convey a cooling fluid. Each of the cooling channels (26) defines a flowpath (28) that has a varying circumferential curvature relative an axial direction.

## Description

### BACKGROUND

Rocket motor operation involves very high temperatures that can damage and erode a thrust chamber or nozzle. As a result, a liquid coolant, such as a propellant, is used to cool the chamber and/or nozzle. For example, some or all of the propellant is passed through tubes or channels provided around the chamber and/or nozzle. These passages are created by brazing cooling tubes on the chamber/nozzle or by milling channels along the chamber/nozzle walls, for example. The propellant is often cryogenic and provides effective thermal load management. The heated propellant is then fed into a gas-generator or injected directly into the main combustion chamber.

### SUMMARY

According to an aspect of the present invention, there is provided a heat exchanger including a wall disposed about a central axis and having a first end, a second end, a first side bounding a chamber, and a second side opposite the first side. The first side and the second side extend from the first end to the second end. An array of cooling channels is embedded in the wall to convey a cooling fluid. Each of the cooling channels defines a flowpath that has a varying circumferential curvature relative an axial direction.

Optionally, and in accordance with the above, the varying circumferential curvature has a periodic form.

Optionally, and in accordance with any of the above" the periodic form is sinusoidal.

Optionally, and in accordance with any of the above,, the periodic form is non-sinusoidal.

Optionally, and in accordance with any of the above,, the cooling channels define a flowpath that have a varying radial curvature relative the axial direction.

Optionally, and in accordance with any of the above,, each of the cooling channels includes a first section extending from the first end to the second end, a second section extending from the second end to the first end, and a turn section at the second end fluidly connecting the first section and the second section.

Optionally, and in accordance with any of the above" in the wall, the cooling channels are fluidly isolated from each other.

Optionally, and in accordance with any of the above,, each of the cooling channels defines a channel width, the waveform channel profile defines a period and an amplitude, and a ratio of the amplitude to the channel width is 2:1 or more.

Optionally, and in accordance with any of the above,, the wall is cylindrical.

Optionally, and in accordance with any of the above,, the wall is frustoconical.

Optionally, and in accordance with any of the above,, each of the cooling channels includes a first section extending from the first end to the second end, a second section extending from the second end to the first end, and a turn section at the second end connecting the first section and the second section. The cooling channels are fluidly isolated from each other. The cooling channels are of constant cross-section along the length direction from the first end to the second end. Each of the cooling channels define a channel width. The waveform channel profile defines a period and an amplitude, and a ratio of the amplitude to the channel width is 2:1 or more.

According to another aspect of the present invention, there is provided an article including a nozzle formed of a wall disposed about a central axis and circumscribing a chamber. The wall has a first axial end, a second axial end, an inner side bounding the chamber, and an outer side opposite the inner side. An array of cooling channels is embedded in the wall to convey a cooling fluid in the wall. Each of the cooling channels defines a flowpath that has a varying circumferential curvature relative an axial direction.

Optionally, and in accordance with any of the above,, the cooling channels are circumferentially nested.

Optionally, and in accordance with any of the above,, the nozzle is a converging-diverging nozzle.

Optionally, and in accordance with any of the above,, each of the cooling channels include a first section extending from the first axial end to the second axial end, a second section extending from the second axial end to the first axial end, and a turn section at the second end fluidly connecting the first section and the second section.

Optionally, and in accordance with any of the above,, in the wall, the cooling channels are fluidly isolated from each other.

Optionally, and in accordance with any of the above,, the cooling channels are of constant cross-section along the length direction from the first end to the second end.

Optionally, and in accordance with any of the above,, each of the cooling channels define a channel width, the waveform channel profile defines a period and an amplitude, and a ratio of the amplitude to the channel width is 2:1 or more.

The present invention may include any one or more of the individual features disclosed above and/or below alone or in any combination thereof.

### BRIEF DESCRIPTION OF THE DRAWINGS

The various features and advantages of the present invention will become apparent to those skilled in the art from the following detailed description. In this invention, like reference numerals designate like elements where appropriate and reference numerals with the addition of one-hundred or multiples thereof designate modified elements that are understood to incorporate the same features and benefits of the corresponding elements. The drawings that accompany the detailed description can be briefly described as follows.
Figure 1 illustrates a heat exchanger.
Figure 2 illustrates a perspective view of the channels of a heat exchanger.
Figure 3 illustrates a side view of the channels of a heat exchanger.
Figure 4 illustrates a portion of a channel of a heat exchanger.
Figure 5 illustrates a radially sectioned view of a heat exchanger.
Figure 6 illustrates a perspective view of the channels of a nozzle that includes a heat exchanger.
Figure 7 illustrates a side view of the channels of a nozzle that includes a heat exchanger.

### DETAILED DESCRIPTION

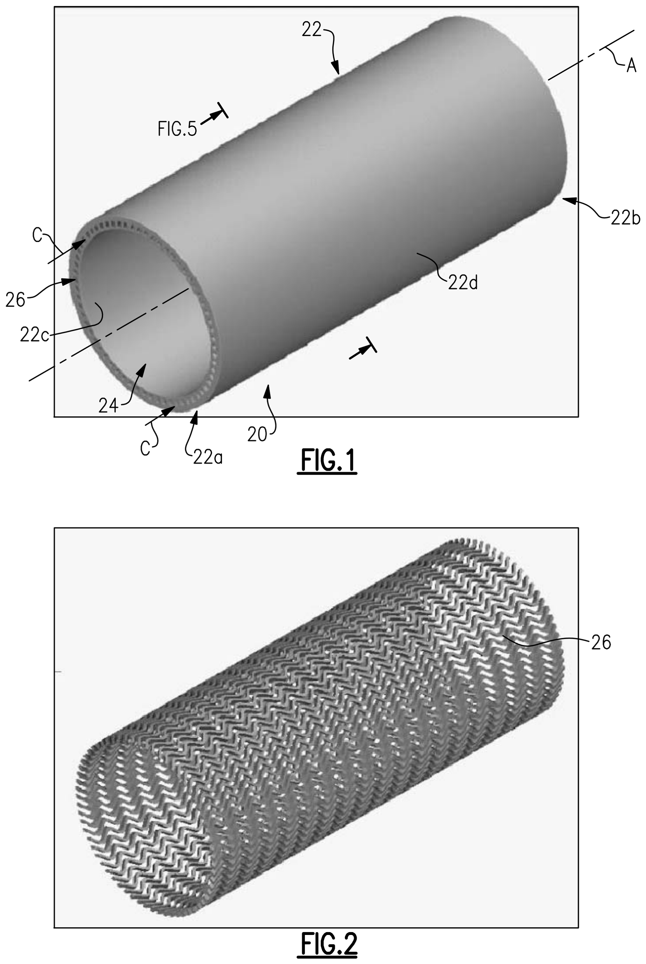

Figure 1 schematically illustrates selected portions of a heat exchanger 20. The heat exchanger 20 may be in a nozzle of a rocket engine, a combustion chamber, or an air breathing propulsion system, but is not limited thereto, and may be applied for any end use article that employs regenerative cooling.

The heat exchanger 20 includes a wall 22 that has a first end 22a, a second end 22b, a first (inner) side 22c that bounds a chamber 24 (e.g., a combustion chamber), and a second (outer) side 22d opposite the first side 22c. As will be appreciated, the wall 22 is shown with a cylindrical geometry about a central axis A such that the wall 22 circumscribes the chamber 24. Alternatively, however, the wall 22 may have another geometry selected in accordance with the end-use application. The wall 22 defines a length direction between the ends 22a/22b, which in this case is the axial direction.

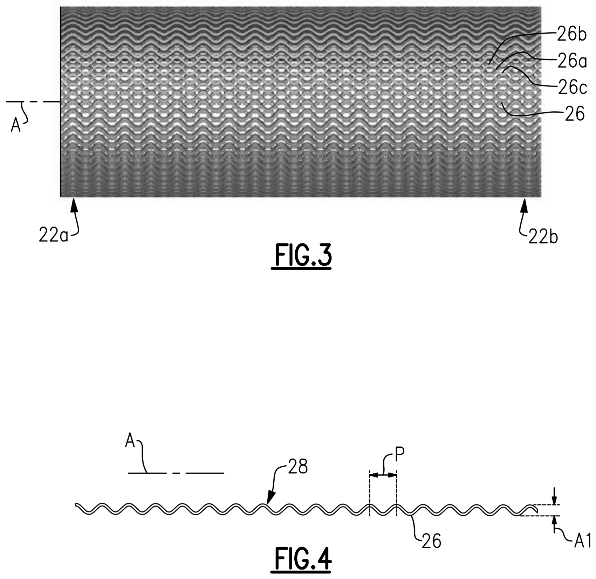

There is an array of cooling channels 26 embedded in the wall 22 to convey a cooling fluid (generally designated at C) that flows through the wall 22 for thermal management. The cooling fluid is not limited, but for example may be a propellant. Figures 2 and 3 illustrate the channels 26 in solid form with the solid portions of the wall 22 excluded so that the geometry of the channels 26 can be seen, and Figure 4 illustrates a representative portion of one of the channels 26. The channels 26 may have a circular, rectangular or other cross sectional geometry. Each of the cooling channels 26 defines a flowpath 28 from one end 22a to the other end 22b. The profile includes curvatures that may vary axially, radially and circumferentially. The profile is not linear or straight in three dimensional space. The curvature may vary periodically. The curvature may appear wavelike. For instance, in the illustrated example, the flowpath 28 is of a periodic varying curvature. As an example, the flowpath 28 has a curvature that varies sinusoidally. Alternatively, the flowpath curvature is non-sinusoidal.

The channels 26 are closely grouped together in order to facilitate good heat transfer. For example, as shown in Figure 3 the channels 26 are circumferentially nested, which means that the peaks of one channel are interdigitated between the troughs of the immediately adjacent channel. Such a configuration permits the channels 26 to be closely spaced, which can be varied in order to tailor the heat exchange capacity. The channels 26 in the wall 22 are fluidly isolated from each other. For instance, coolant is provided at the first end into the first section 26a of each of the channels 26. The coolant flows in the first section 26a from the first end 22a to the second end 22b where it then exits the wall 22.

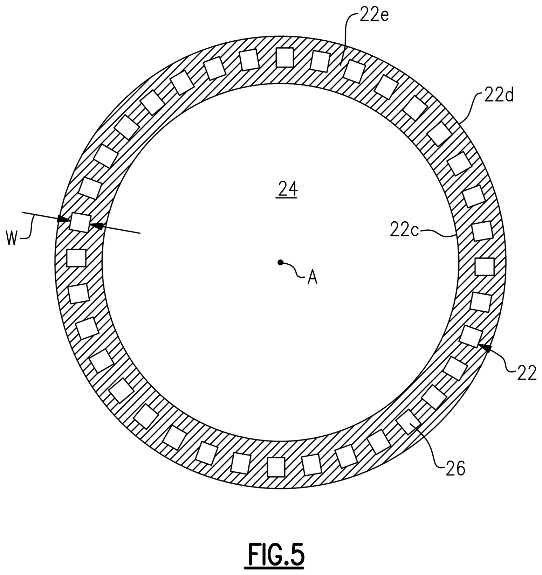

Figure 5 illustrates a sectioned view taken in a radial plane through the wall 22 to show a representative view of the cross-sections of the channels 26. In this example, the channels 26 are of constant rectangular cross-section along the (axial) length direction from the first end 22a to the second end 22b, but alternatively could be circular, oval, or other shape. For instance, each of the channels 26 defines a channel width W, the waveform channel profile 28 defines a period P and an amplitude A1 (see Figure 4). The channel width W, period P and amplitude A1 may be selected based on the operating characteristic goals such as desired pressure drop and flow rate. Example of a ratio of the amplitude A1 to the channel width W may be 2:1 or more, such as 3:1, 5:1, or 8:1. For instance, such a ratio permits scaling of the channels 26 while ensuring that the channels 26 provide low pressure drop through the undulating flow path.

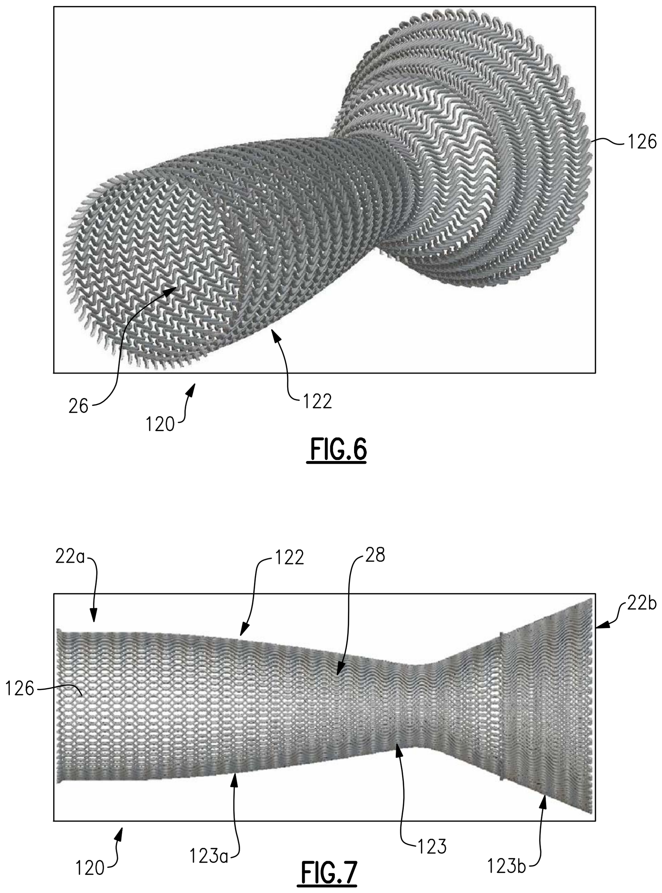

Figures 6 and 7 illustrate another example article 120 with a wall 122 having channels 126. Like the prior figures, the channels 126 are illustrated in solid form with the solid portions of the wall 122 excluded. The channels 126 have the waveform channel profile 28 as described above. However, in this example, rather than the cylindrical shape, the wall 122 is formed as a convergent-divergent nozzle 123, with a converging frustoconical section 123a and a diverging frustoconical section 123b.

The articles 20/120 can be formed using additive manufacturing, such as but not limited to, selective laser melting of a metallic alloy powder. The alloy is not particularly limited and may be selected based on the desired performance of the end use article. As examples, the alloy may be a titanium alloy, copper alloy or a nickel-chromium alloy, such as INCONEL 625.

The configuration of the channels 26/126 also facilitates increased strength of the wall 22/122 in comparison to linear channels. For example, solid lands 22e (Figure 5) between the channels 26/126 extend at an approximately 45° angle, along the sloped sides of the undulations of the channels 26/126. The 45° angle facilitates balancing out of hoop stresses and pressure stresses from coolant in the channels, resulting in an overall increase in strength in comparison to linear channels, which permits greater flexibility in designing the article 20/120. Additionally, the waveform channel profile 28 also enhances heat transfer performance. Typically, an increase in heat transfer capability comes at a penalty of increased pressure loss of the flow of coolant. However, the waveform channel profile 28 permits a relatively tight channel spacing for enhanced heat transfer, yet the ability to have wide channels that mitigate pressure loss. As a result, at least modest improvements in heat transfer can be achieved without the pressure loss penalty as would normally be expected.

Although a combination of features is shown in the illustrated examples, not all of them need to be combined to realize the benefits of various embodiments of this invention. In other words, a system designed according to an embodiment of this invention will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this invention. The scope of legal protection given to this invention can only be determined by studying the following claims.

## Claims

1. A heat exchanger (20; 120) comprising:
a wall (22; 122) disposed about a central axis (A) and having a first end (22a), a second end (22b), a first side (22c) bounding a chamber (24), and a second side (22d) opposite the first side (22c), the first side (22c) and the second side (22d) extending from the first end (22a) to the second end (22b); and
an array of cooling channels (26; 126) embedded in the wall (22; 122) to convey a cooling fluid, each of the cooling channels (26; 126) defining a flowpath (28) that has a varying circumferential curvature relative an axial direction.

2. The heat exchanger (20; 120) of claim 1 wherein the varying circumferential curvature has a periodic form.

3. The heat exchanger (20; 120) as recited in claim 2, wherein:
the periodic form is sinusoidal; or
the periodic form is non-sinusoidal.

4. The heat exchanger (20; 120) of any preceding claim, wherein the cooling channels (26; 126) define a flowpath (28) that have a varying radial curvature relative the axial direction.

5. The heat exchanger (20; 120) as recited in any preceding claim, wherein each of the cooling channels (26; 126) includes a first section extending from the first end (22a) to the second end (22b), a second section extending from the second end (22b) to the first end (22a), and a turn section at the second end (22b) fluidly connecting the first section and the second section.

6. The heat exchanger (20; 120) as recited in any preceding claim, wherein, in the wall (22; 122), the cooling channels (26; 126) are fluidly isolated from each other.

7. The heat exchanger (20; 120) as recited in any preceding claim, wherein each of the cooling channels (26; 126) defines a channel width (W), the waveform channel profile (28) defines a period (P) and an amplitude (A1), and a ratio of the amplitude (A1) to the channel width (W) is 2:1 or more.

8. The heat exchanger (20) as recited in any preceding claim, wherein:
the wall (22) is cylindrical; or
the wall (122) is frustoconical.

9. The heat exchanger (20; 120) as recited in any preceding claim, wherein the cooling channels (26; 126) are of constant cross-section along the length direction from the first end (22a) to the second end (22b).

10. An article (120) comprising:
a nozzle formed of a wall (122) disposed about a central axis (A) and circumscribing a chamber (24), the wall (122) having a first axial end (22a), a second axial end (22b), an inner side (22c) bounding the chamber (24), and an outer side (22d) opposite the inner side (22c),
an array of cooling channels (126) embedded in the wall (122) to convey a cooling fluid in the wall (122), each of the cooling channels (126) defining a flowpath (28) that has a varying circumferential curvature relative an axial direction.

11. The article (120) as recited in claim 10, wherein the cooling channels (126) are circumferentially nested.

12. The article (120) as recited in claim 10 or 11, wherein the nozzle is a converging-diverging nozzle.

13. The article (120) as recited in any of claims 10 to 12, wherein each of the cooling channels (126) includes a first section extending from the first axial end (22a) to the second axial end (22b), a second section extending from the second axial end (22b) to the first axial end (22a), and a turn section at the second end (22b) fluidly connecting the first section and the second section.

14. The article (120) as recited in claim any of claims 10 to 13, wherein:
in the wall (122), the cooling channels (126) are fluidly isolated from each other; and/or
the cooling channels (126) are of constant cross-section along the length direction from the first end (22a) to the second end (22b).

15. The article (120) as recited in any of claims 10 to 15, wherein each of the cooling channels (126) defines a channel width (W), the waveform channel profile (28) defines a period (P) and an amplitude (A1), and a ratio of the amplitude (A1) to the channel width (W) is 2:1 or more.
